# FASCICULE DE BREVET EUROPEEN

(11) **EP 3 032 423 B1**
(45) Date de publication et mention de la délivrance du brevet: **22.03.2017**
(21) Numéro de dépôt: 15194377.6
(22) Date de dépôt: 12.11.2015
(51) Int. Cl.: G06F 11/34, G06F 11/36

(54) **MÉTHODE ET SYSTÈME POUR LA VALIDATION DE SCÉNARIOS DE TEST DE PERFORMANCE**
VERFAHREN UND SYSTEM ZUR VALIDIERUNG VON LEISTUNGSTEST-SZENARIEN
METHOD AND SYSTEM FOR VALIDATING PERFORMANCE TEST SCENARIOS

(30) Priorité: 09.12.2014 FR 1462132
(43) Date de publication de la demande: 15.06.2016
(73) Titulaire: Bull S.A.S., 78340 Les Clayes-sous-Bois (FR)
(72) Inventeur: AIELLO, Damien, 38500 LA BUISSE (FR); DEMEILLIEZ, Bruno, 38330 MONTBONNOT SAINT MARTIN (FR); ROBINE, Christophe, 38130 ECHIROLLES (FR)
(74) Mandataire: Demulsant, Xavier

(56) Documents cités:
- WO-A1-2013/098500
- WO-A2-03/021444
- US-B1- 6 286 046

## Description

La présente invention concerne généralement le domaine des tests de performances des systèmes d'information, et plus particulièrement le contrôle du déroulement des scénarios de test de performances.

On entend, ici, par système d'information toute infrastructure informatique comprenant une ou plusieurs ressources matérielles, telles que des serveurs et/ou des bases de données, configurées pour mettre à la disposition de plusieurs utilisateurs au moins un service rendu par des ressources logicielles.

Après le développement ou toute modification dans un système d'information, une étape de test de ses performances (« benchmark » en terminologie anglo-saxonne) est généralement requise. Cette étape permet, notamment, de détecter les faiblesses de ce système d'information, et par conséquent les corrections à lui apporter, ainsi que de quantifier les gains apportés par ces éventuelles corrections.

Il se trouve, à cet égard, différents outils (ou logiciels) de test de performances permettant de simuler divers scénarios d'utilisation d'un système d'information cible pour en détecter les défauts. Parmi ces outils, on cite, à titre d'exemples, l'outil WebLOAD® (proposé par RADVIEW®), l'outil LoadRunner® (proposé par *hp*®)*,* l'outil Rational Performance Tester® (proposé par IBM®), l'outil SOAtest® & LoadTest® (proposé par PARASOFT®), l'outil TOSCA-Testsuite®, ou l'outil *JMeter*® (un logiciel libre édité par la Fondation Apache®).

Faisant généralement partie d'un kit de test de performances, ces outils permettent, en effet, de stresser un système d'information via une injection de charge (ou de requêtes) conformément à des scénarios prédéfinis et à des instanciations différentes de ces scénarios.

Lors d'une campagne de test de performances, une diversification des scénarios de test de performance est nécessaire. Ainsi, dans la pratique, un grand nombre de scénarios de test de performances ou de jeux de requêtes est rejoué plusieurs fois par l'outil d'injection de charge.

Le document US-B1-6 286 046 illustre de telles techniques.

Cependant, aucune solution actuelle ne permet de confirmer que la réponse à une requête comprise dans un scénario est dûment fournie par le système d'information cible de sorte que le déroulement de ce scénario puisse être considéré comme valide (ou fonctionnel). En l'occurrence, un message d'erreur ou surtout une mauvaise réponse (c.à.d. en présence d'une réponse mais qui n'est pas la bonne) peuvent apparaître, en réponse à une requête d'un certain scénario, sans que ceux-ci ne soient détectés. La vérification humaine des réponses une à une en temps réel ne peut être réalisée vu que l'injection des requêtes doit être continue par définition même du test de charge ou de performances. En outre, selon le nombre des scénarios et la complexité de ces derniers, la vérification ultérieure une à une des réponses du système d'information est certainement très laborieuse et très consommatrice de temps, et ne peut arrêter l'exécution/déroulement d'un scénario qui serait non fonctionnel dès ses premières requêtes (c.à.d. pour lequel au moins une erreur ou encore une mauvaise réponse apparaîtrait dès le début de l'exécution de ce scénario).

En somme, à ce jour, aucune solution ne permet de valider automatiquement le bon déroulement d'un scénario de test de performances, en validant que les réponses à l'ensemble des requêtes de ce scénario sont correctes. Il s'ensuit qu'il n'est actuellement pas possible de détecter automatiquement des éléments de validation d'un scénario de test de performances.

Un objet de la présente invention est de remédier aux inconvénients précités.

Un autre objet de la présente invention est de pouvoir détecter les scénarios de test de performances non-fonctionnels, et plus précisément les requêtes pour lesquelles une mauvaise réponse ou une erreur est retournée par le système d'information sous test.

A cette fin, l'invention se rapporte, selon un premier aspect, à un procédé pour contrôler le déroulement d'un scénario de test de performances d'un système d'information, ce procédé comprenant les étapes suivantes
- interception par un sondeur d'une première requête adressée audit système d'information et de la réponse fournie par ledit système d'information à ladite première requête, cette réponse incluant une adresse d'une première ressource cette première requête interceptée ayant une structure prédéfinie de requêtes; ce sondeur (5) étant en outre configuré pour tester la correspondance de la structure de la première requête (3) interceptée à une structure prédéfinie de requête ;
- identification par un module de synthèse d'une première donnée distinctive de ladite première ressource;

les étapes suivantes étant réalisées par un outil (9) de test de performance :
- inclusion, audit scénario de test de performances, de ladite première requête;
- conformément audit scénario de test de performances, injection, à destination dudit système d'information, de la requête incluse ;
- réception d'une réponse fournie par ledit système d'information à ladite requête incluse, cette réponse incluant une adresse d'une deuxième ressource ;
- vérification de la présence, dans la deuxième ressource, de la donnée distinctive de la première ressource ;
- en présence dans la deuxième ressource de la donnée distinctive de la première ressource, considération de la réponse à la requête incluse audit scénario de test de performances comme correcte.

Ce procédé comprenant, en outre,
- une étape d'interception d'une troisième requête adressée audit système d'information et de la réponse fournie par ledit système d'information à ladite troisième requête, cette réponse incluant une adresse d'une troisième ressource;
- une étape d'identification d'une troisième donnée distinctive de ladite troisième ressource, cette étape d'identification comprenant une comparaison entre le contenu de la première ressource et le contenu de la troisième ressource ;
- une étape d'enregistrement, dans une base de données, de la première requête interceptée, cette première requête étant comprise dans une liste finie de requêtes prédéfinies, ou ayant une structure prédéfinie de requêtes.

L'invention se rapporte, selon un deuxième aspect, à un système pour contrôler le déroulement d'un scénario de test de performances d'un système d'information, ce système comprenant
- un sondeur configuré pour intercepter une première requête adressée audit système d'information et la réponse fournie par ledit système d'information à ladite première requête, cette réponse incluant une adresse d'une première ressource;
- un module de synthèse configuré pour identifier une première donnée distinctive de ladite première ressource;
- un outil de test de performances configuré pour
   ∘ permettre l'inclusion, audit scénario de test de performances, de ladite première requête;
   ∘ conformément audit scénario de test de performances, injecter, à destination dudit système d'information, la requête incluse ;
   ∘ recevoir une réponse fournie par ledit système d'information à la requête incluse, cette réponse incluant une adresse d'une deuxième ressource ;
   ∘ vérifier la présence, dans la deuxième ressource, de la donnée distinctive de la première ressource ;
   ∘ en présence dans la deuxième ressource de la donnée distinctive de la première ressource, considérer la réponse à la requête incluse audit scénario de test de performances comme correcte.

Le sondeur est, en outre, configuré pour intercepter une troisième requête adressée audit système d'information et de la réponse fournie par ledit système d'information à ladite troisième requête, cette réponse incluant une adresse d'une troisième ressource. Le module de synthèse est, en outre, configuré pour identifier une troisième donnée distinctive de ladite troisième ressource en comparant le contenu de la première ressource et le contenu de la troisième ressource.

L'invention se rapporte, selon un quatrième aspect, à un produit programme d'ordinateur implémenté sur un support mémoire, susceptible d'être mis en oeuvre au sein d'une unité de traitement informatique et comprenant des instructions pour la mise en oeuvre du procédé résumé ci-dessus.

D'autres caractéristiques et avantages de l'invention apparaîtront plus clairement et de manière concrète à la lecture de la description ci-après de modes de réalisation préférés, faite ci-après en référence aux dessins annexés dans lesquels :
- la figure 1 illustre schématiquement une représentation fonctionnelle non limitative d'un mode de réalisation pour contrôler le déroulement d'un scénario de test de performances; et
- la figure 2 illustre schématiquement des étapes pour la synthèse de requêtes-réponses collectées préalablement à partir d'interactions utilisateur avec un système d'information cible.

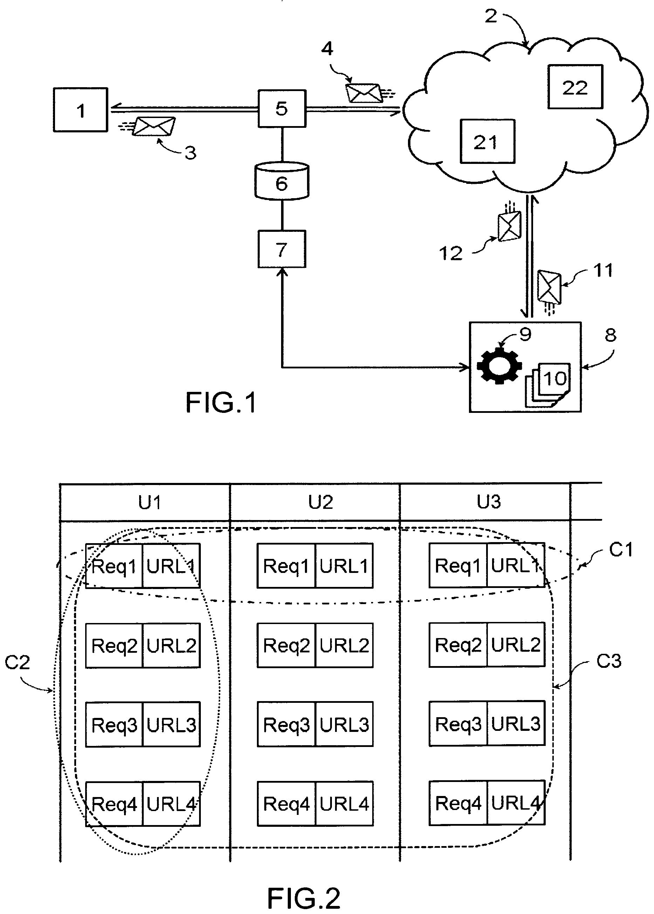

Sur la figure 1 est représenté un terminal **1** utilisateur via lequel, un utilisateur peut adresser une requête **3** à un ou plusieurs module(s) **21-22** d'un système **2** d'information. Cette requête **3** peut être une requête de type GET, ou POST. Le terminal **1** utilisateur est, en outre, configuré pour recevoir, en réponse à la requête **3,** une réponse **4** retournée par le système **2** d'information. La réponse **4** à une requête **3** comprend un localisateur uniforme de ressource (ou « URL » pour Uniform Resource Locator) ou, plus généralement, une adresse d'une ressource du système **2** d'information. Cette ressource désignée par la réponse **4** peut être une page Web, un document/fichier de tout type tel qu'un fichier PDF®, DOC®, XLS®, audio, vidéo, d'aide, une image, ou un courriel.

Les modules **21-22** du système **2** d'information incluent, par exemples, un ou plusieurs serveurs **21-22** (tel qu'un serveur Web, un serveur ftp, un serveur de messagerie électronique, un serveur d'application Java ou tout autre serveur) et/ou une ou plusieurs bases de données **21-22** interconnectés entre eux pour supporter une application informatique telle qu'une application Web, une application ftp, une application de streaming, une application de messagerie électronique, une plateforme de distribution/partage de contenu ou une plate-forme de calcul.

La transaction « requête **3 -** réponse **4** » fait, généralement, partie d'un acte métier initié par l'utilisateur pour bénéficier d'un service applicatif ou, plus généralement, d'un service fourni par le système **2** d'information. Le service fourni par le système **2** d'information peut être, par exemple, un service applicatif mis à disposition sur demande depuis le terminal **1** utilisateur par des serveurs Web **21-22.** Ce service peut comprendre, par exemples, un service de vente en ligne, un service d'information en ligne, un service de recherche sur le Web, un service d'interrogation de bases de données en ligne, un service de remplissage et de soumission d'un formulaire électronique, un service de téléchargement et/ou de chargement de contenus, un service de partage de contenus, ou un service de messagerie électronique.

Le terminal 1 utilisateur est un ordinateur, une tablette numérique, un Smartphone ou plus généralement tout équipement utilisateur permettant à un utilisateur d'émettre des requêtes **3** et de recevoir des réponses **4** vers/depuis un module **21-22** du système **2** d'information. Il est à noter que ce terminal **1** utilisateur via lequel un utilisateur peut interagir avec le système **2** d'information n'est donnée qu'à titre d'exemple non limitatif. Ce terminal **1** utilisateur peut, en effet, être remplacé par tout serveur, toute application informatique ou, plus généralement, toute entité cliente via laquelle une requête peut être adressée au système **2** d'information.

Les requêtes **3** et leurs réponses **4** respectives sont interceptées par un sondeur **5** du système d'information **2.** En effet, indépendamment du protocole de communication utilisé (http, https, WAP, jms, jdbc, ou ftp par exemple), toute requête **3** (qu'elle soit de type GET ou de type POST) adressée au système **2** d'information et la réponse **4** qui lui est associée sont interceptées par le sondeur **5.**

Les requêtes **3** reçues par le système **2** d'information, ainsi que leurs réponses respectives fournies par ce système **2** d'information sont enregistrées de manière chronologique (ou séquentielle) dans un fichier ou une base **6** de données. Il en résulte que la base **6** de données comprend des données enregistrées par ordre chronologique sous la forme de couples « requête **3 -** réponse **4**», les requêtes **3** étant issues d'une pluralité de terminaux **1** utilisateur. Autrement dit, les données stockées dans la base **6** de données listent chronologiquement les requêtes **3** et les réponses **4** correspondantes, respectivement, reçues et fournies par le système **2** d'information. De préférence, les « requêtes **3**-réponses **4** » sont enregistrées par terminal **1** utilisateur (c.à.d. par utilisateur). Il est à noter que c'est une copie des requêtes **3** et des réponses **4** interceptées qui est enregistrée dans la base **6** de donnés, les requêtes **3** et les réponses **4** étant transférées à leurs destinations finales.

Dans un mode de réalisation, le sondeur **5** du système **2** d'information est configuré pour n'enregistrer dans la base **6** de données que des requêtes (et, donc, aussi que des réponses **4**) prédéfinies parmi les requêtes **3** interceptées. Ainsi, lors d'une phase de configuration, le sondeur **5** peut être programmé pour
- n'enregistrer que des requêtes provenant de terminaux **1** utilisateur prédéfinis (par exemples, via leurs adresses IPs, leurs adresses MACs, leurs technologies d'accès, leurs protocoles d'accès et/ou leurs localisations). Ceci permet, avantageusement, d'enregistrer les requêtes **3** issues d'une population cible ou d'éviter celles soumises d'une manière automatique par un robot ;
- n'enregistrer que des requêtes **3** soumises pendant des intervalles de temps prédéfinis ;
- ne suivre que des requêtes **3** prédéfinies (et, par conséquent, que des réponses **4** (ou écrans/pages) prédéfinies). Pour cela, le sondeur **5** teste, dans un mode de réalisation,
   ∘ la présence, dans une liste finie de requêtes prédéfinies, de la requête **3,** ou
   ∘ la correspondance de la structure de la requête **3** à une structure prédéfinie de requêtes.

On entend par structure que des requêtes enregistrées dans la base **2** de données. On entend par « structure » (ou « pattern » en terminologie anglo-saxonne) d'une requête la forme ou le modèle générique d'une requête pour formuler la demande d'un certain service auprès du système **2** d'information (par exemple, la structure d'une requête Google® pour effectuer une recherche simple est de la forme suivante: www.google.fr/search?q=test où q qui prend la valeur de « test » est dans cet exemple le seul argument de cette requête).

Il s'ensuit, avantageusement, que dans un mode de réalisation les requêtes **3** interceptées et les réponses **4** correspondantes se rapportant à des fichiers statiques (css, jpg, js par exemples) ne sont pas enregistrées par le sondeur **5** du système **2** d'information.

Dans un mode de réalisation, le sondeur **5** marque (c'est-à-dire, étiquète ou « tag » en terminologie anglo-saxonne) la requête **3** interceptée de sorte à pouvoir l'identifier d'une manière unique. Pour cela, dans un mode de réalisation, le sondeur **5** modifie l'entête de la requête **3** interceptée et/ou celui de la réponse **4** correspondante de sorte à pouvoir identifier d'une manière unique chaque couple « requête **3**-réponse **4** ». Dans un mode de réalisation, le sondeur **5** marque l'entête http de la requête **3** et/ou l'entête http de la réponse **4** à l'aide d'un identifiant associé au terminal **1** utilisateur (adresse IP, adresse MAC par exemple), et/ou déduit de(s) paramètre(s) propres à chaque requête **3** et/ou réponse **4** (timestamp, taille, contenu, par exemple), et/ou généré d'une manière aléatoire ou pseudo-aléatoire, et/ou à l'aide d'un indice qui s'incrémente automatiquement à chaque nouvelle requête **3** interceptée.

Dans un mode de réalisation, l'identifiant est choisi de sorte à pourvoir identifier les requêtes **3** et leurs réponses **4** respectives d'une manière anonyme (tel qu'un identifiant généré d'une manière aléatoire, seul ou en combinaison avec d'autres paramètres tel que l'adresse IP du terminal **1** utilisateur). Dans un autre mode de réalisation, le couple « requête **3 -** réponse **4** » enregistré dans la base **6** de données est enrichi par l'identifiant par lequel la requête **3** et/ou la réponse **4** est marquée, par le service applicatif requis, ou par tout autre paramètre spécifique à la requête 3 et/ou à la réponse **4** correspondante (tel qu'un timestamp ou une adresse IP du terminal 1 utilisateur).

Pour des raisons de confidentialité, les « requêtes **3 -** réponses **4** » enregistrées dans la base **6** de données sont, dans un mode de réalisation, cryptées selon une méthode de cryptage prédéfinie.

Les données enregistrées, lors d'une phase de collecte de données, dans la base **6** de données par le sondeur **5** du système d'information **2** sont analysées par un module **7** de synthèse.

Le module **7** de synthèse permet d'identifier dans la ressource désignée par chaque réponse **4** (c'est-à-dire, la ressource vers laquelle pointe l'adresse ou le localisateur uniforme de ressource comprise dans la réponse **4**) fournie par le système **2** d'information une donnée distinctive de cette ressource. Cette donnée distinctive permet de déterminer si une réponse **4** ultérieure à la requête **3** est correcte ou non. Autrement dit, la présence de cette donnée distinctive dans toute réponse **4** ultérieure à la requête **3** permet de confirmer que cette réponse **4** ultérieure est correcte. En revanche, toute réponse **4** ultérieure à la requête **3** dont la ressource ne comprend pas la donnée distinctive identifiée dans la ressource désignée par la réponse **4** enregistrée dans la base **6** de données est considérée fausse.

Ainsi, le module **7** de synthèse est configuré pour identifier (ou isoler) une donnée distinctive (caractéristique, spécifique) de la ressource (c'est à dire de la page Web, ou du document) désignée par une réponse **4** à une requête **3** de sorte à pourvoir déterminer si une réponse **4** ultérieure à cette même requête **3** est correcte ou non.

Dans un mode de réalisation, la donnée spécifique de la ressource désignée par une réponse **4** comprend un mot-clé ou une combinaison de mots-clés permettant d'identifier cette ressource en cas de rejeu de la requête **3.**

La donnée distinctive de la ressource désignée par une réponse **4** peut être liée à la requête **3** du couple « requête-réponse», ou d'une requête **3** antérieure d'un autre couple « requête-réponse».

A titre d'exemple, pour un système d'information **2** de vente en ligne (tel que Amazon.com®), un utilisateur soumet une première requête **3** pour rechercher un produit P. Une première réponse **4** lui est fournie par le système **2** d'information. La page Web désignée par cette première réponse **4** comprend une liste (vide ou non) d'articles du type du produit P recherché, ainsi qu'une première section reprenant les termes recherchés (à savoir, le produit P). Si la liste d'articles s'étale sur plus d'une page Web, une donnée distinctive de la page Web désignée par la première réponse **4** peut être
- les termes recherchés (en l'espèce, le produit P) à identifier dans la première section, en combinaison avec
- le numéro de la page affichant une première partie de la liste d'articles (en l'espèce, le numéro un).

Si l'utilisateur requière via une deuxième requête **3** la page suivante affichant une deuxième partie de la liste d'articles, une deuxième réponse **4** lui est retournée. Une donnée distinctive de la page Web désignée par cette deuxième réponse **4** peut être les termes recherchés lors de la première requête **3** (en l'espèce, le produit P) en combinaison avec le numéro de page affichant la deuxième partie de la liste d'articles (en l'espèce, le numéro deux).

A titre d'exemple, pour un service d'authentification dans un système **2** d'information, lorsque l'utilisateur soumet une requête **3** de type POST (en envoyant un identifiant et un mot de passe), la page Web désignée par la réponse **4** affiche, si l'authentification est réussie, l'identifiant de l'utilisateur. Cet identifiant peut, donc, être utilisé comme une donnée distinctive de la ressource désignée par la réponse **4.**

Dans un mode de réalisation, lorsque la ressource désignée par la réponse **4** est un document, une donnée distinctive de ce document (tel qu'un fichier PDF®, un fichier MS Word®, une photo, un courriel, un fichier vidéo ou autre) peut être son nom, sa taille, sa résolution, son auteur, sa date de création, sa source, ou toute autre donnée descriptive de ce document.

En se référant à la figure 2, pour identifier une donnée distinctive des ressources désignées par les réponses **4,** le module **7** de synthèse :
- compare (comparaison **C1** sur la figure 2) le contenu des ressources désignées par les réponses **URL1** (c'est-à-dire par les localisateurs uniformes de ressources) enregistrées pour différents utilisateurs **U1-U3** en réponse à une requête **Req1.** Cette comparaison **C1** a pour effet d'isoler et supprimer les éléments communs et statiques, et de conserver et diversifier les éléments dynamiques ;
- compare (comparaison **C2** sur la figure 2) le contenu des ressources désignées par les réponses **URL1-URL4** enregistrées pour chaque utilisateur **U1-U3** en réponse à ses requêtes **Req1-Req4** à l'effet d'isoler une ou plusieurs données uniques dans chaque ressources, permettant d'identifier avec certitude chaque ressource ;
- compare (comparaison **C3** sur la figure 2) le contenu de l'ensemble des ressources désignées par les réponses **URL1-URL4** enregistrées pour différents utilisateurs **U1-U3** à l'effet d'isoler et supprimer les éléments de présentation communs susceptibles d'avoir été omis par les comparaisons **C1** et **C2** précédentes.

Les données distinctives identifiées par le module **7** de synthèse, respectivement, dans les ressources désignées par les réponses **4** sont associées par ce module **7** de synthèse aux requêtes **3** correspondantes. Ainsi, dans un mode de réalisation, les couples « requêtes **3-** réponses **4** » enregistrés dans la base **5** de données sont transformés en « requête **3 -** donnée distinctive de la ressource désignée par la réponse **4**»**,** ou en « requête **3 -** réponse **4 -** donnée distinctive de la ressource désignée par la réponse **4** ».

Le module **7** de synthèse produit, ainsi, des requêtes **3** et des données distinctives des ressources désignées par les réponses **4** à ces requêtes **3** qui peuvent être incluses dans des scénarios de test de performances.

En se référant de nouveau à la figure 1, un outil **9** de test de performances, installé dans un équipement **8** utilisateur, est configuré pour exécuter un ou plusieurs scénarios **10** de test de performances.

L'équipement **8** utilisateur est un dispositif du type du terminal 1 utilisateur pourvu d'un outil **9** de test de performances.

Dans un mode de réalisation, l'outil **9** de test de performances est l'outil *JMeter*®, toute version ultérieure de celui-ci ou, plus généralement, tout moyen de test de performances de type *JMeter*® tel que WebLOAD®, LoadRunner®, Rational Performance Tester®, SOAtest® & LoadTest®, ou TOSCA-Testsuite®.

Un scénario **10** de test de performances comprend une liste de requêtes **11** à émettre par l'outil **9** de test de performances. Cet outil **9** de test de performances permet de stresser, conformément au scénario **10** de test de performances, le système **2** d'information cible via une injection de requêtes **11** (ou de charge) à destination de ce système. Dans un mode de réalisation, le scénario **10** de test de performances comprend une suite de requêtes **11** représentant au mieux un scénario majeur d'utilisation du service proposé par le système **2** d'information (c'est-à-dire, la suite d'écrans la plus fréquentée par les utilisateurs).

Dans un mode de réalisation, les requêtes **11** du scénario **10** de test de performances
- sont choisies parmi les requêtes enregistrées dans la base **6** de données ; et/ou
- ont la même structure ou « pattern » que des requêtes enregistrées dans la base **6** de données.

En réponse à une requête **11** d'un scénario **10** de test de performances, l'outil **9** de test de performances reçoit, depuis le système **2** d'information, une réponse **12.** L'outil **9** de test de performance vérifie la présence, dans la ressource désignée par la réponse **12,** de la donnée distinctive associée à la requête **11** (ou équivalemment, à celle associée à la requête **3** qui est identique ou similaire à la requête **11**). En présence des données distinctives dans la ressource désignée par la réponse **12,** alors cette réponse **12** est considérée correcte. Le contenu de la ressource désignée par la réponse **12** est, ainsi, comparé aux mots-clés (c.à.d. données distinctives) associés à la requête **3** qui est conforme à la requête **11.**

Avantageusement, les données distinctives peuvent être générées par le module **7** de synthèse dans le format de l'outil **9** de test de performances qui se charge de l'injection des requêtes **11** et de la vérification des réponses **12.** Autrement dit, les données distinctives qui devraient être comprises dans les ressources désignées par les réponses **12** aux requêtes **11** sont, d'abord, déterminées depuis la base **6** de données, ensuite insérées au scénario **10** de test de performances de sorte que l'outil **9** de test de performance puisse juger le bon déroulement du scénario **10** du test de performances.

Dans un autre mode de réalisation, le module de synthèse **7** se charge
- d'identifier dans la base **6** de données une requête **3** ayant la même structure (ou « pattern » en terminologie anglo-saxonne) qu'une requête **11** du scénario **10** de test de performances;
- de vérifier la présence, dans la ressource désignée par la réponse **12** à la requête **11** du scénario **10** du test de performances, des données distinctives de la ressource désignée par la réponse **4** à la requête **3** ayant la même structure que la requête **12.** En présence des données distinctives dans la ressource désignée par la réponse **12,** alors cette réponse **12** est considérée correcte. Ainsi, le contenu de la ressource de la réponse **12** est comparé aux mots-clés associés à la requête **3** qui est conforme à la requête **11.**

Si toutes les réponses **12** aux requêtes **11** d'un scénario **10** de test de performances sont correctes, alors ce scénario **10** est dûment déroulé. Dans le cas contraire, ce scénario **10** est considéré non fonctionnel. Dans ce dernier cas, un scénario **10** non fonctionnel est écarté de l'exécution avec mention de la requête **11** pour laquelle une mauvaise réponse **12** est obtenue.

Dans un mode de réalisation, l'outil **9** de test de performance est configuré pour communiquer la requête **11,** simultanément, au système **2** d'information et au module de synthèse **7** afin d'avoir la réponse **12** depuis le système **2** d'information et la donnée distinctive (depuis le module **7** de synthèse) qui doit être présente dans cette réponse **12.** L'outil **9** de test de performance est, en outre, configuré pour vérifier la présence de la donnée distinctive dans la ressource désignée par la réponse **12,** et par conséquent de valider ou non le bon déroulement du scénario **10.**

Il s'ensuit que les données distinctives des ressources désignées par les réponses **4** aux requêtes **3** sont utilisées pour juger la justesse d'une réponse **12** à une requête **11,** et par conséquent pour valider ou non le bon déroulement d'un scénario **10** de test de performances.

Dans un mode de réalisation, le sondeur **5** du système**7** d'information est une application logicielle, ou plus généralement un produit programme d'ordinateur, comprenant des instructions pour la collecte des « requêtes **3-**réponses **4** ». Cette application logicielle est implémentée au sein d'un serveur physique. Dans un mode de réalisation, ce serveur physique est le serveur frontal du système **2** d'information. Le serveur frontal comprend la couche de présentation au(x) service(s) applicatif(s) fourni(s) par le système **2** d'information. Ce serveur frontal reçoit les requêtes **3** depuis les terminaux **1** utilisateur, achemine ces requêtes **3** au(x) module(s) applicatifs **21-22** du système d'information **2** pour traitement, et retourne les réponses **4** de ces modules applicatifs **21-22** aux terminaux **1** utilisateur. A titre illustratifs, le serveur frontal peut être un serveur Apache et/ou un serveur SQL.

Dans un autre mode de réalisation, le serveur physique intégrant le sondeur **5** est un serveur DNS (pour « Domain Name System ») via lequel une pluralité de terminaux **1** utilisateur est connectée au système **2** d'information.

Plus généralement, le sondeur **5** du système **2** d'information est de type reverse-proxy dans le sens où il se positionne en amont de la chaîne applicative du système **2** d'information afin de pouvoir intercepter l'ensemble des requêtes-réponses (de type http, https, ftp, jms, ou jdbc par exemples) faisant intervenir ce système **2** d'information.

Avantageusement, l'implémentation du sondeur **5** est totalement transparente pour les utilisateurs et ne requière aucune modification à apporter au système **2** d'information.

Dans un mode de réalisation, le module **7** de synthèse est une application logicielle, ou plus généralement un produit programme d'ordinateur, comprenant des instructions pour la comparaison et la caractérisation de ressources fournies par un système d'information et étant intégré ou non dans le même serveur physique que celui du sondeur **5.**

Avantageusement, les modes de réalisation décrits ci-dessus permettent de valider de façon automatique le bon déroulement des scénarios **10** de test de performances. Il est entendu par « automatique » le fait que la validité d'une réponse **12** fournie par un système **2** d'information à une requête **11** d'un scénario **10** de test de performances est vérifiée via l'exécution d'instructions prédéfinies. Des réponses **12** correctes ont pour effet de rendre le scénario **10** de test de performances fonctionnel et exécutable d'une manière efficace par un outil **8** de test de performances.

Il est à noter, par ailleurs, qu'il est fait référence ci-dessus aux « tests de performances », mais les méthodes et systèmes décrits conviennent bien également pour les tests de charge, les tests de validation, les tests de non-régression, ou plus généralement, pour tout mécanisme similaire au test de performances. En effet, ces méthodes et systèmes ne requièrent aucune modification pour être utilisés à des fins de test de charge, de test de validation, de test de non-régression

## Revendications

1. Procédé pour contrôler le déroulement d'un scénario **(10)** de test de performances d'un système **(2)** d'information, ce procédé comprenant les étapes suivantes
- interception par un sondeur (5) d'une première requête **(3)** adressée audit système **(2)** d'information et de la réponse **(4)** fournie par ledit système **(2)** d'information à ladite première requête **(3),** cette réponse **(4)** incluant une adresse d'une première ressource, cette première requête interceptée ayant une structure prédéfinie de requêtes; ce sondeur (5) étant en outre configuré pour tester la correspondance de la structure de la première requête (3) interceptée à une structure prédéfinie de requête;
- identification par un module de synthèse (7) d'une première donnée distinctive de ladite première ressource;
les étapes suivantes étant réalisées par un outil (9) de test de performance :
- inclusion, audit scénario de test de performances, de ladite première requête **(3);**
- conformément audit scénario **(10)** de test de performances, injection, à destination dudit système **(2)** d'information, de la requête **(11)** incluse;
- réception d'une réponse **(12)** fournie par ledit système **(2)** d'information à ladite requête **(11)** incluse, cette réponse **(12)** incluant une adresse d'une deuxième ressource ;
- vérification de la présence, dans la deuxième ressource, de la donnée distinctive de la première ressource ;
- en présence dans la deuxième ressource de la donnée distinctive de la première ressource, considération de la réponse **(12)** à la requête **(11)** incluse audit scénario **(10)** de test de performances comme correcte.

2. Le procédé de la revendication précédente, comprenant en outre
- une étape d'interception d'une troisième requête **(3)** adressée audit système **(2)** d'information et de la réponse **(4)** fournie par ledit système **(2)** d'information à ladite troisième requête **(3),** cette réponse (4) incluant une adresse d'une troisième ressource, cette troisième requête interceptée ayant une structure prédéfinie de requêtes;
- une étape d'identification d'une troisième donnée distinctive de ladite troisième ressource, cette étape d'identification comprenant une comparaison entre le contenu de la première ressource et le contenu de la troisième ressource.

3. Système pour contrôler le déroulement d'un scénario **(10)** de test de performances d'un système **(2)** d'information, ce système comprenant
- un sondeur **(5)** configuré pour intercepter une première requête **(3)** adressée audit système **(2)** d'information et la réponse **(4)** fournie par ledit système **(2)** d'information à ladite première requête **(3),** cette réponse **(4)** incluant une adresse d'une première ressource, ce sondeur **(5)** étant en outre configuré pour tester la correspondance de la structure de la première requête **(3)** interceptée à une structure prédéfinie de requêtes;
- un module **(7)** de synthèse configuré pour identifier une première donnée distinctive de ladite première ressource;
- un outil **(9)** de test de performances configuré pour
∘ permettre l'inclusion, audit scénario de test de performances, de ladite première requête **(3);**
∘ conformément audit scénario **(10)** de test de performances, injecter, à destination dudit système **(2)** d'information, la requête incluse ;
∘ recevoir une réponse **(12)** fournie par ledit système **(2)** d'information à la requête **(11)** incluse, cette réponse **(12)** incluant une adresse d'une deuxième ressource ;
∘ vérifier la présence, dans la deuxième ressource, de la donnée distinctive de la première ressource ;
∘ en présence dans la deuxième ressource de la donnée distinctive de la première ressource, considérer la réponse **(12)** à la requête **(11)** incluse audit scénario **(10)** de test de performances comme correcte.

4. Le système de la revendication précédente, dans lequel
- le sondeur **(5)** est, en outre, configuré pour intercepter une troisième requête **(3)** adressée audit système **(2)** d'information et de la réponse **(4)** fournie par ledit système **(2)** d'information à ladite troisième requête **(3),** cette réponse **(4)** incluant une adresse d'une troisième ressource, ce sondeur **(5)** étant en outre configuré pour tester la correspondance de la structure de la troisième requête **(3)** interceptée à une structure prédéfinie de requêtes;
- le module (7) de synthèse étant, en outre, configuré pour identifier une troisième donnée distinctive de ladite troisième ressource en comparant le contenu de la première ressource et le contenu de la troisième ressource.

5. Produit programme d'ordinateur implémenté sur un support mémoire, susceptible d'être mis en oeuvre au sein d'une unité de traitement informatique et comprenant des instructions pour la mise en oeuvre d'un procédé selon la revendication 1 ou 2.

## Patentansprüche

1. Verfahren zur Überwachung des Ablaufs eines Testszenarios (10) von Leistungen eines Informationssystems (2), wobei dieses Verfahren die folgenden Schritte enthält
- Abfangen einer ersten an das Informationssystem (2) gerichteten Anfrage (3) und der vom Informationssystem (2) auf die erste Anfrage (3) gelieferten Antwort (4) durch ein Sondiergerät (5), wobei diese Antwort (4) eine Adresse einer ersten Ressource einschließt, wobei diese erste abgefangene Anfrage eine vordefinierte Struktur von Anfragen hat; wobei dieses Sondiergerät (5) außerdem konfiguriert ist, die Übereinstimmung der Struktur der ersten abgefangenen Anfrage (3) mit einer vordefinierten Anfragenstruktur zu testen;
- Erkennung eines ersten unterscheidenden Datenwerts der ersten Ressource durch ein Synthesemodul (7);
wobei die folgenden Schritte durch ein Leistungstestwerkzeug (9) durchgeführt werden:
- Einschließen der ersten Anfrage (3) in das Leistungstestszenario;
- entsprechend dem Leistungstestszenario (10), Einspeisen der eingeschlossenen Anfrage (11) in das Informationssystem (2);
- Empfang einer vom Informationssystem (2) auf die eingeschlossene Anfrage (11) gelieferten Antwort (12), wobei diese Antwort (12) eine Adresse einer zweiten Ressource einschließt;
- Überprüfung des Vorhandenseins des unterscheidenden Datenwerts der ersten Ressource in der zweiten Ressource;
- bei Vorhandensein des unterscheidenden Datenwerts der ersten Ressource in der zweiten Ressource, Betrachten der Antwort (12) auf die im Leistungstestszenario (10) eingeschlossene Anfrage (11) als korrekt.

2. Verfahren nach dem vorhergehenden Anspruch, das außerdem enthält
- einen Schritt des Abfangens einer an das Informationssystem (2) gerichteten dritten Anfrage (3) und der vom Informationssystem (2) auf die dritte Anfrage (3) gelieferten Antwort (4), wobei diese Antwort (4) eine Adresse einer dritten Ressource umfasst, wobei diese dritte abgefangene Anfrage eine vordefinierte Anfragenstruktur hat;
- einen Schritt des Erkennens eines dritten unterscheidenden Datenwerts der dritten Ressource, wobei dieser Erkennungsschritt einen Vergleich zwischen dem Inhalt der ersten Ressource und dem Inhalt der dritten Ressource enthält.

3. System zur Überwachung des Ablaufs eines Leistungstestszenarios (10) eines Informationssystems (2), wobei dieses System enthält
- ein Sondiergerät (5), das konfiguriert ist, eine erste an das Informationssystem (2) gerichtete Anfrage (3) und die vom Informationssystem (2) auf die erste Anfrage (3) gelieferte Antwort (4) abzufangen, wobei diese Antwort (4) eine Adresse einer ersten Ressource einschließt, wobei dieses Sondiergerät (5) außerdem konfiguriert ist, die Übereinstimmung der Struktur der ersten abgefangenen Anfrage (3) mit einer vordefinierten Anfragenstruktur zu testen;
- ein Synthesemodul (7), das konfiguriert ist, einen ersten unterscheidenden Datenwert der ersten Ressource zu erkennen;
- ein Leistungstestwerkzeug (9), das konfiguriert ist
∘ den Einschluss der ersten Anfrage (3) in das Leistungstestszenario zu erlauben;
∘ entsprechend dem Leistungstestszenario (10) die eingeschlossene Anfrage in das Informationssystem (2) einzuspeisen;
∘ eine vom Informationssystem (2) auf die eingeschlossene Anfrage (11) gelieferte Antwort (12) zu empfangen, wobei diese Antwort (12) eine Adresse einer zweiten Ressource einschließt;
∘ das Vorhandensein des unterscheidenden Datenwerts der ersten Ressource in der zweiten Ressource zu überprüfen;
∘ bei Vorhandensein des unterscheidenden Datenwerts der ersten Ressource in der zweiten Ressource die Antwort (12) auf die in das Leistungstestszenario (10) eingeschlossene Anfrage (11) als korrekt zu betrachten.

4. System nach dem vorhergehenden Anspruch, wobei
- das Sondiergerät (5) außerdem konfiguriert ist, eine dritte an das Informationssystem (2) gerichtete Anfrage (3) und die vom Informationssystem (2) auf die dritte Anfrage (3) gelieferte Antwort (4) abzufangen, wobei diese Antwort (4) eine Adresse einer dritten Ressource einschließt, wobei dieses Sondiergerät (5) außerdem konfiguriert ist, die Übereinstimmung der Struktur der dritten abgefangenen Anfrage (3) mit einer vordefinierten Anfragenstruktur zu testen;
- das Synthesemodul (7) außerdem konfiguriert ist, einen dritten unterscheidenden Datenwert der dritten Ressource zu erkennen, indem es den Inhalt der ersten Ressource und den Inhalt der dritten Ressource vergleicht.

5. Computerprogrammprodukt, das auf einem Speicherträger ausgeführt wird, das innerhalb einer EDV-Verarbeitungseinheit angewendet werden kann und Anweisungen zur Durchführung eines Verfahrens nach Anspruch 1 oder 2 enthält.

## Claims

1. Method for monitoring the progress of an information system (2) performance test scenario (10), this method comprising the following steps
- interception by a sounding apparatus (5) of a first request (3) addressed to said information system (2) and of the response (4) supplied by said information system (2) to said first request (3), this response (4) including an address of a first resource, this first intercepted request having a predefined pattern of requests; this sounding apparatus (5) being further configured to test the correspondence of the pattern of the first intercepted request (3) to a predefined request pattern;
- identification by a synthesis module (7) of a first distinctive datum of said first resource;
the following steps being performed by a performance test tool (9):
- inclusion, in said performance test scenario, of said first request (3);
- in accordance with said performance test scenario (10), injection, to said information system (2), of the included request (11);
- reception of a response (12) supplied by said information system (2) to said included request (11), this response (12) including an address of a second resource;
- verification of the presence, in the second resource, of the distinctive datum of the first resource;
- if the distinctive datum of the first resource is present in the second resource, consideration that the response (12) to the request (11) included in said performance test scenario (10) is correct.

2. Method according to the preceding claim, further comprising
- a step of interception of a third request (3) addressed to said information system (2) and of the response (4) supplied by said information system (2) to said third request (3), this response (4) including an address of a third resource, this third intercepted request having a predefined request pattern;
- a step of identification of a third distinctive datum of said third resource, this identification step comprising a comparison between the content of the first resource and the content of the third resource.

3. System for monitoring the progress of an information system (2) performance test scenario (10), this system comprising
- a sounding apparatus (5) configured to intercept a first request (3) addressed to said information system (2) and the response (4) supplied by said information system (2) to said first request (3), this response (4) including an address of a first resource, this sounding apparatus (5) being further configured to test the correspondence of the pattern of the first intercepted request (3) to a predefined request pattern ;
- a synthesis module (7) configured to identify a first distinctive datum of said first resource;
- a performance test tool (9) configured to
∘ allow the inclusion, in said performance test scenario, of said first request (3);
∘ in accordance with said performance test scenario (10), inject, to said information system (2), the included request;
∘ receive a response (12) supplied by said information system (2) to said included request (11), this response (12) including an address of a second resource;
∘ verify the presence, in the second resource, of the distinctive datum of the first resource;
∘ if the distinctive datum of the first resource is present in the second resource, consider the response (12) to the request (11) included in said performance test scenario (10) to be correct.

4. System according to the preceding claim, in which
- the sounding apparatus (5) is further configured to intercept a third request (3) addressed to said information system (2) and the response (4) supplied by said information system (2) to said third request (3), this response (4) including an address of a third resource, this sounding apparatus (5) being further configured to test the correspondence of the pattern of the third intercepted request (3) to a predefined request pattern;
- the synthesis module (7) being further configured to identify a third distinctive datum of said third resource by comparing the content of the first resource and the content of the third resource.

5. Computer program product implemented on a memory medium, that can be implemented within a computer processing unit and comprising instructions for implementing a method according to Claim 1 or 2.
